# EUROPÄISCHE PATENTSCHRIFT

(11) **EP 4 142 986 B1**
(45) Veröffentlichungstag und Bekanntmachung des Hinweises auf die Patenterteilung: **13.03.2024**
(21) Anmeldenummer: 21716293.2
(22) Anmeldetag: 25.03.2021
(51) Int. Cl.: B25J 9/08, B25J 15/00, B25J 15/06

(54) **SAUGGREIFER UND UNTERDRUCKHANDHABUNGSANLAGE**
SUCTION GRIPPER AND VACUUM HANDLING SYSTEM
DISPOSITIF DE PRÉHENSION ASPIRANT ET SYSTÈME DE MANIPULATION SOUS VIDE

(30) Priorität: 29.04.2020 DE 102020111694
(43) Veröffentlichungstag der Anmeldung: 08.03.2023
(73) Patentinhaber: J. Schmalz GmbH, 72293 Glatten (DE)
(72) Erfinder: SCHAAF, Walter, 72250 Freudenstadt-Grüntal (DE); SCHMALZ, Kurt, 72280 Dornstetten (DE)
(74) Vertreter: DREISS Patentanwälte PartG mbB
(86) Internationale Anmeldenummer: PCT/EP2021/057815
(87) Internationale Veröffentlichungsnummer: WO 2021/219303

(56) Entgegenhaltungen:
- JP-A- 2012 011 515
- JP-A- 2017 113 870

## Beschreibung

Die Erfindung betrifft einen Sauggreifer gemäß dem Oberbegriff des Anspruchs 1, sowie eine Unterdruckhandhabungsanlage gemäß dem Anspruch 10.

Derartige Sauggreifer dienen zum Greifen von Gegenständen mittels Unterdruck und finden bspw. als Endeffektor in Unterdruckhandhabungsanlagen zum Handhaben von Gegenständen Verwendung. Die Sauggreifer weisen üblicherweise eine Saugfläche auf, welche einen Saugquerschnitt zum Ansaugen und Halten des Gegenstands bereitstellt. Um einen Gegenstand sicher ansaugen zu können, ist es wichtig, dass der Saugquerschnitt möglichst gut an die Geometrie und Größenverhältnisse des zu greifenden Gegenstands angepasst ist. Ist der Saugquerschnitt beispielsweise zu klein bemessen, kann unter Umständen nicht genügend Greifkraft bereitgestellt werden, um den Gegenstand sicher zu handhaben. Ist der Saugquerschnitt hingegen zu groß bemessen oder weist eine unpassende Form auf, sodass die Saugfläche bspw. abschnittsweise über einen zu greifenden Gegenstand übersteht, kann es beim Ansaugen des Gegenstands zu unerwünschter Leckage kommen. Darüber hinaus können überstehende Abschnitte des Sauggreifers Störkonturen beim Greifen bilden.

Vor diesem Hintergrund ist es in der Praxis bekannt, Sauggreifer mit unterschiedlich großen Saugquerschnitten zu verwenden und diese in Abhängigkeit von Geometrie und Beschaffenheit eines zu greifenden Gegenstands entsprechend auszuwechseln. Dies führt jedoch regelmäßig zu unvorteilhaften Totzeiten im Greifprozess.

Es sind auch Sauggreifer bekannt, bei denen einzelne Bereiche der Saugfläche selektiv aktiviert und deaktiviert werden können. Beispielsweise können in der Saugfläche vorhandene Saugstellen einzeln aktivierbar und deaktivierbar ausgebildet sein. Entsprechend ausgestaltete Sauggreifer gehen jedoch mit vergleichsweise großem konstruktiven Aufwand einher. Zudem können die deaktivierten Saugbereiche weiterhin Störkonturen beim Greifen von kleinen Gegenständen bilden.

In der DE 10 2018 120 155 A1 ist ein Sauggreifer beschrieben, welcher ein Basisteil und einen Saugkörper umfasst. Der Saugkörper stellt eine Saugfläche bereit und umfasst mehrere strahlenartig angeordnete Streben und eine sich zwischen den Streben erstreckende flexible und luftdichte Wandung. Die Streben sind dabei derart angeordnet, dass mittels einer Spreizung der Streben eine Größe der Saugfläche einstellbar ist. Bei einer solchen Ausgestaltung ergibt sich eine vergleichsweise große Bauhöhe und die Einstellung der Größe der Saugfläche ist mit einer Verformung großer Materialbereiche verbunden, was zu Materialermüdung führen kann.

Aus der JP 2017 113870 A ist ein Sauggreifer mit den Merkmalen des Oberbegriffs des Anspruchs 1 bekannt.

Die vorliegende Erfindung beschäftigt sich mit der Aufgabe, einen Greifer für Gegenstände mit unterschiedlichen Formen und Größenverhältnissen bereitzustellen, welcher eine hohe Lebensdauer aufweist und zuverlässiges Greifen ermöglicht.

Diese Aufgabe wird durch einen Sauggreifer mit den Merkmalen des Anspruchs 1 gelöst.

Der Sauggreifer ist zum Greifen und Handhaben eines Gegenstands mittels Unterdruck ausgebildet. Der Sauggreifer umfasst ein Basisteil, welches insbesondere einen Unterdruckanschluss zur Versorgung des Sauggreifers mit Unterdruck umfasst.

Der Sauggreifer weist außerdem eine Saugseite mit einer Saugfläche auf, wobei die Saugfläche einen effektiv wirksamen Saugquerschnitt zum Ansaugen des Gegenstands bereitstellt. Die Saugfläche kann insbesondere eben erstreckt sein. Es ist jedoch auch denkbar, dass die Saugfläche gewölbt ist.

Der Sauggreifer weist außerdem wenigstens ein Verschiebeteil auf, welches relativ zu dem Basisteil verschiebbar ist. Insbesondere ist das wenigstens eine Verschiebeteil an dem Basisteil derart gehaltert, dass das wenigstens eine Verschiebeteil relativ zu dem Basisteil verschiebbar ist.

Das Basisteil und das wenigstens eine Verschiebeteil sind derart ausgebildet, dass sie gemeinsam die Saugfläche bereitstellen, insbesondere diese begrenzen. Das Basisteil und das wenigstens eine Verschiebeteil sind ferner derart ausgebildet, dass durch Verschieben des wenigstens einen Verschiebeteils relativ zu dem Basisteil der Saugquerschnitt der Saugfläche einstellbar ist.

Bei einem derartigen Sauggreifer kann der Saugquerschnitt auf einfache Weise flexibel an eine zur Verfügung stehende Greiffläche eines Gegenstands angepasst werden. Insbesondere kann eine Greifkraft auf Basis der zur Verfügung stehenden Greiffläche maximiert werden. Dies ermöglicht ein zuverlässiges Greifen. Bei der Einstellung des Saugquerschnitts durch Verschiebung des Verschiebeteils gegenüber dem Basisteil können Materialermüdung und Verschleiß stark reduziert werden. Darüber hinaus können Störkonturen beim Greifen reduziert werden. Beispielsweise kann der Saugquerschnitt insbesondere derart eingestellt werden, dass der Sauggreifer mit seiner Saugfläche nicht über einen zu greifenden Gegenstand übersteht. Insgesamt ermöglicht es eine solche Ausgestaltung somit Gegenstände unterschiedlicher Größe und Beschaffenheit mit einem einzigen Sauggreifer sicher zu greifen. Es ist also insbesondere kein Greiferwechsel erforderlich.

Es ist möglich, dass nur ein Verschiebeteil vorgesehen ist. Vorteilhaft kann jedoch auch sein, dass mehrere Verschiebeteile vorgesehen sind, welche entlang jeweiliger Verschiebewege relativ zu dem Basisteil verschiebbar sind. Dabei können die Verschiebewege der einzelnen Verschiebeteile beispielsweise entlang parallel zueinander verlaufender oder identischer Verschiebeachsen verlaufen. Es ist auch denkbar, dass die Verschiebeachsen schräg zueinander verlaufen, z.B. sternförmig aufeinander zu laufen. Insbesondere ist es auch möglich, dass die Verschiebewege entlang bogenförmig ausgebildeter Verschiebekurven verlaufen.

Bei Ausgestaltungen des Sauggreifers mit mehreren Verschiebeteilen kann eine Verschiebebewegung der Verschiebeteile voneinander entkoppelt sein. Dann können die Verschiebeteile insbesondere voneinander unabhängig relativ zu dem Basisteil verschiebbar ausgebildet sein. Es ist auch möglich, dass die Verschiebeteile miteinander bewegungsgekoppelt sind.

Vorzugsweise ist ein erster Bereich des Saugquerschnitts von dem Basisteil bereitgestellt und wenigstens ein weiterer Bereich des Saugquerschnitts ist größenveränderbar in Abhängigkeit einer Verschiebungskonfiguration des wenigstens einen Verschiebeteils gegenüber dem Basisteil bereitgestellt. Insofern umfasst der Saugquerschnitt also einen ersten Bereich, der dem Basisteil zugeordnet ist, sowie wenigstens einen weiteren Bereich, der dadurch bereitgestellt wird, dass das Verschiebeteil eine Verschiebungskonfiguration gegenüber dem Basisteil einnimmt. Mit anderen Worten ist es also insbesondere möglich, durch Auseinanderschieben von Basisteil und wenigstens einem Verschiebeteil einen zusätzlichen Saugquerschnitt entstehen zu lassen und somit den effektiv wirksamen Saugquerschnitt zu vergrößern. Insbesondere wird effektiv ein erster Bereich des Saugquerschnitts durch das Basisteil bereitgestellt, und wenigstens ein weiterer Bereich der Saugquerschnitts wird durch das wenigstens einen Verschiebeteil bereitgestellt.

Das Basisteil und das wenigstens eine Verschiebeteil sind zumindest abschnittsweise ineinander einschiebbar und wieder ausziehbar. Das Basisteil und das wenigstens eine Verschiebeteil sind erfindungsgemäß derart ausgebildet, dass beim Ineinander-Einschieben der Saugquerschnitt der Saugfläche verkleinert wird und beim Auseinanderziehen der Saugquerschnitt vergrößert wird. Insbesondere umgreift das wenigstens eine Verschiebeteil zumindest abschnittsweise das Basisteil oder umgekehrt. Bei einer solchen Ausgestaltung sind dann Störkonturen beim Greifen besonders gering.

Für eine zuverlässige Funktion der Verschiebebewegung des wenigstens einen Verschiebeteil ist es insbesondere vorteilhaft, wenn das wenigstens eine Verschiebeteil an dem Basisteil verschiebbar gelagert ist.

Vorzugsweise weisen das Basisteil eine Führungsfläche und das Verschiebeteil eine zugeordnete Gegenfläche derart auf, dass beim Verschieben des Verschiebeteils seine Gegenfläche an der Führungsfläche abgleitet. Beispielsweise kann die Führungsfläche durch eine das Basisteil begrenzende Begrenzungswand des Basisteils bereitgestellt sein, insbesondere durch eine Gehäusewand eines Gehäuses des Basisteils. Die Gegenfläche kann dann insbesondere durch eine das wenigstens eine Verschiebeteil begrenzende Begrenzungswand bereitgestellt sein, insbesondere durch eine Gehäusewand eines Gehäuses des wenigstens einen Verschiebeteils.

Eine besonders bevorzugte Ausgestaltung besteht ferner darin, dass die Führungsfläche und die Gegenfläche zumindest abschnittsweise als Parallelflächen ausgebildet sind, also zumindest abschnittsweise parallel zueinander verlaufen. Die Parallelflächen können dabei eben oder gewölbt sein. Insbesondere sind auch Freiformflächen denkbar.

Vorzugsweise ist die Saugfläche von einer Dichtlippe umgrenzt. Insbesondere umfasst die Dichtlippe wenigstens zwei zumindest abschnittsweise ineinander einschiebbare und wieder ausziehbare Dichtlippenabschnitte. Ein erster Dichtlippenabschnitt ist dabei insbesondere von dem Basisteil bereitgestellt und ein zweiter Dichtlippenabschnitt ist insbesondere von dem wenigstens einen Verschiebeteil bereitgestellt. Bei einer solchen Ausgestaltung wird beim Auseinanderziehen der Dichtlippenabschnitte ein zusätzlicher Saugquerschnitt bereitgestellt, der insgesamt von einer entsprechenden Dichtlippe umgeben ist, sodass sich ein effektiv wirksamer Saugquerschnitt insgesamt vergrößert. Beim Ineinandereinschieben der Dichtlippenabschnitte wird der Saugquerschnitt dann wieder verkleinert. Vorzugsweise liegen die Dichtlippenabschnitte derart eng aneinander an, dass sie gegeneinander abdichten, aber dennoch eine Relativbewegung zwischen Basisteil und wenigstens einem Verschiebeteil zulassen. Die Dichtlippe kann bspw. aus einem Elastomer hergestellt sein. Es ist auch möglich, dass die Dichtlippe aus einem technischen Schaum hergestellt ist.

Die Saugfläche kann z.B. in der Art einer Saugglocke durch eine Saugöffnung bereitgestellt sein, welche von der Dichtlippe umrandet ist. Denkbar sind aber auch andere Ausgestaltungen.

Beispielsweise kann die Saugfläche auch durch eine Saugplatte mit einer Mehrzahl von Sauglöchern bereitgestellt sein. Die Saugplatte umfasst insbesondere wenigstens zwei relativ zueinander verschiebbare, vorzugsweise zumindest abschnittsweise ineinander einschiebbare und wieder auseinanderziehbare, Saugplattensegmente. Dabei ist ein erstes Saugplattensegment insbesondere durch das Basisteil bereitgestellt und ein zweites Saugplattensegment ist insbesondere durch das wenigstens eine Verschiebeteil bereitgestellt. Eine Kontaktfläche der Saugplatte zur Anlage an einen zu greifenden Gegenstand ist vorzugsweise aus einem flexiblen Belag, z.B. Schaum, gebildet.

Eine vorteilhafte Weiterbildung besteht darin, dass das Basisteil und/oder das wenigstens eine Verschiebeteil ein Gehäuse mit einer Unterdruckkammer aufweist, wobei die Unterdruckkammer eine in Richtung zu der Saugplatte hin orientierte Ansaugöffnung aufweist. Vorzugsweise ist die Ansaugöffnung derart angeordnet und ausgebildet, dass sie in einer Konfiguration des Sauggreifers mit ineinander eingeschobenen Saugplattensegmenten durch die Saugplatte abgedeckt ist und in einer Konfiguration des Sauggreifers mit auseinandergezogenen Saugplattensegmenten zumindest abschnittsweise geöffnet ist. In der Konfiguration mit auseinandergezogenen Saugplattensegmenten kann dann die Ansaugöffnung einen zusätzlichen Saugquerschnitt bereitstellen, sodass der effektive wirksame Saugquerschnitt insgesamt vergrößert wird. In der Konfiguration des Sauggreifers mit ineinander eingeschobenen Saugplattensegmenten kann die Ansaugöffnung z.B. auch dazu dienen, nur eine Teilmenge der Sauglöcher mit Unterdruck zu versorgen.

Um eine ungewollte Leckage zu vermeiden, kann es vorteilhaft sein, wenn der Sauggreifer eine Dichteinrichtung zur gegenseitigen Abdichtung des Basisteils und des wenigstens einen Verschiebeteils umfasst. Es ist möglich, dass eine solche Abdichtung durch eng aneinander oder aufeinander liegende Dichtlippenabschnitte (Elastomerteile / Schaumteile) oder Saugplattensegmente erzielt wird. Es ist auch möglich, dass die Dichteinrichtung wenigstens eine abrollbare Dichtmembran ("Rollmembran") umfasst, welche das Basisteil und das wenigstens eine Verschiebeteil miteinander verbindet. Insbesondere ist die wenigstens eine abrollbare Dichtmembran derart ausgebildet, dass sie dann, wenn der Sauggreifer nicht mit Unterdruck beaufschlagt ist, flexibel beweglich ist, was ein einfaches Verschieben des wenigstens einen Verschiebeteils relativ zu dem Basisteil ermöglicht.

Es ist möglich, dass das wenigstens eine Verschiebeteil manuell relativ zu dem Basisteil verschiebbar ausgebildet ist. Dann ist es beispielsweise denkbar, dass ein Saugquerschnitt zunächst durch Verschieben des wenigstens einen Verschiebeteils relativ zu dem Basisteil eingestellt wird und dann das wenigstens eine Verschiebeteil in dieser Verschiebungskonfiguration durch entsprechende Befestigungsmittel arretiert wird.

Ein vorteilhafter Aspekt besteht darin, dass der Sauggreifer eine Aktorik zum Antreiben einer Verschiebebewegung des wenigstens einen Verschiebeteils relativ zu dem Basisteil umfasst. Dann kann ein Saugquerschnitt auf einfache Weise variabel eingestellt werden, insbesondere automatisiert. Die Aktorik umfasst insbesondere wenigstens einen Aktor, welcher auf verschiedene Weise betrieben sein kann, bspw. pneumatisch, elektrisch, elektro-motorisch (bspw. unter Einsatz eines Formgedächtnismaterials) und/oder hydraulisch. Zur Ansteuerung der Aktorik kann ferner eine Steuereinrichtung vorgesehen sein, welche insbesondere Teil einer Unterdruckhandhabungsanlage sein kann (siehe unten).

Bei einer Ausgestaltung des Sauggreifers mit Aktorik kann es außerdem vorteilhaft sein, wenn der Sauggreifer eine Sensoreinrichtung mit wenigstens einem Sensor zur mittelbaren oder unmittelbaren Erfassung einer Relativposition von Basisteil und wenigstens einem Verschiebeteil umfasst. Dies ermöglicht es, einen Saugquerschnitt präzise einzustellen.

Die eingangs genannte Aufgabe wird auch durch eine Unterdruckhandhabungsanlage gemäß Anspruch 10 gelöst.

Die Unterdruckhandhabungsanlage umfasst einen vorstehend beschriebenen Sauggreifer mit Aktorik gemäß Anspruch 10 und eine Steuereinrichtung. Die Steuereinrichtung ist insbesondere dazu eingerichtet, die Aktorik zum Antreiben einer Verschiebebewegung zwischen dem Basisteil und dem wenigstens einen Verschiebeteil anzusteuern. Eine solche Unterdruckhandhabungsanlage ermöglicht es, den Saugquerschnitt automatisiert auftragsbezogen anzupassen. Insbesondere kann die Steuereinrichtung einen nichtflüchtigen Datenspeicher umfassen, in welchem insbesondere Steuerdaten hinterlegbar oder hinterlegt sind, auf Basis derer die Aktorik zum Verschieben des wenigstens eine Verschiebeteils ansteuerbar ist. Es ist auch denkbar, dass die Steuereinrichtung eine Eingabeschnittstelle aufweist, über welche eine Bedienperson die Aktorik ansteuern kann. Beispielsweise ist es denkbar, dass eine Bedienperson über die Eingabeschnittstelle Informationen in Bezug auf einen zu greifenden Gegenstand (bspw. Abmessungen, Gewicht, etc.) eingeben kann und die Steuereinrichtung dann automatisch eine passende Verschiebungskonfiguration bzw. Saugquerschnitt ermittelt und die Aktorik entsprechend ansteuert.

Im Rahmen einer vorteilhaften Ausgestaltung kann die Unterdruckhandhabungsanlage außerdem eine mit der Steuereinrichtung zusammenwirkende Sensoreinrichtung zur Erfassung der Geometrie des zu greifenden Gegenstandes oder einer zum Greifen geeigneten Fläche des Gegenstandes. Die Sensoreinrichtung ist z.B. als Kameraeinrichtung ausgebildet. Eine Kommunikation zwischen Sensoreinrichtung und Steuereinrichtung kann dabei kabelgebunden oder drahtlos erfolgen. Die Sensoreinrichtung (z.B. Kameraeinrichtung) ist insbesondere dazu ausgebildet, eine Außenform eines zu greifenden Gegenstands zu erfassen, oder insbesondere eine geeignete Greiffläche zu detektieren. Zu diesem Zweck kann die Kameraeinrichtung eine entsprechend eingerichtete Kamera umfassen. Die Steuereinrichtung wirkt mit der Sensoreinrichtung bzw. Kameraeinrichtung insbesondere derart zusammen, dass die Steuereinrichtung in Abhängigkeit einer von der erfassten Außenform des Gegenstands, insbesondere einer Größe einer detektierten Greiffläche, die Aktorik derart ansteuert, dass ein an die Größe der Greiffläche angepasster Saugquerschnitt eingestellt wird. Eine solche Ausgestaltung ermöglicht es, den Saugquerschnitt in Abhängigkeit einer Außenform eines zu greifenden Gegenstands bedarfsgerecht einzustellen. Besonders bevorzugt ist es, wenn die Kameraeinrichtung derart ausgebildet und angeordnet ist, dass mit der Kameraeinrichtung ein solcher Gegenstand erfassbar ist, welcher in einer Förderrichtung - in welcher Gegenstände zu dem Sauggreifer gefördert werden - einem bereits mittels des Sauggreifers gegriffenen Gegenstand nachfolgt.

Optional kann die Unterdruckhandhabungsanlage außerdem einen Aktor zur Verlagerung des wenigstens einen Sauggreifers im Raum umfassen, insbesondere in Form eines Roboters. Dann kann es ferner vorteilhaft sein, wenn die Unterdruckhandhabungsanlage zusätzlich eine mit der Steuereinrichtung zusammenwirkende Sensoreinrichtung zur Ermittlung eines Abstands der Saugfläche von einem zu greifenden Gegenstand umfasst.

Die Erfindung wird im Folgenden anhand der Figuren näher erläutert.

Es zeigen:
- Figuren 1a,b: skizzierte Darstellung eines Sauggreifers in einer Ausgestaltung mit einem Verschiebeteil in einer Seitenansicht (Figur 1a) und in einer Draufsicht (Figur 1b);
- Figuren 2a,b: skizzierte Darstellung einer weiteren Ausgestaltung eines Sauggreifers mit einem Verschiebeteil in einer Untersicht bei eingeschobenen Verschiebeteil (Figur 2a) und ausgezogenem Verschiebeteil (Figur 2b);
- Figuren 3a,b: skizzierte Darstellung eines Sauggreifers in einer weiteren Ausgestaltung mit zwei Verschiebeteilen in einer Draufsicht bei eingeschobenen Verschiebeteilen (Figur 3a) und ausgezogenen Verschiebeteilen (Figur 3b);
- Figur 4: vergrößerter Ausschnitt des Sauggreifers gemäß Figur 3a in einer Schnittansicht entlang der in Figur 3a eingezeichneten Schnittlinie IV-IV;
- Figuren 5a,b: skizzierte Darstellung eines Sauggreifers in einer Ausgestaltung mit Saugplatte in einer Untersicht mit ineinander eingeschobenen Saugplattensegmenten (Figur 5a) und ausgezogenen Saugplattensegmenten (Figur 5b);
- Figur 6: skizzierte Darstellung eines Sauggreifers in einer Ausgestaltung mit drei Verschiebeteilen in einer Draufsicht;
- Figur 7: skizzierte Darstellung Sauggreifers in einer Ausgestaltung mit vier Verschiebeteilen in einer Draufsicht;
- Figur 8: skizzierte Darstellung eines Sauggreifers in einer weiteren Ausgestaltung mit zwei Verschiebeteilen in einer Draufsicht; und
- Figur 9: schematische Darstellung einer Unterdruckhandhabungsanlage umfassend einen Sauggreifer.

In der nachfolgenden Beschreibung sowie in den Figuren sind für identische oder einander entsprechende Merkmale jeweils dieselben Bezugszeichen verwendet.

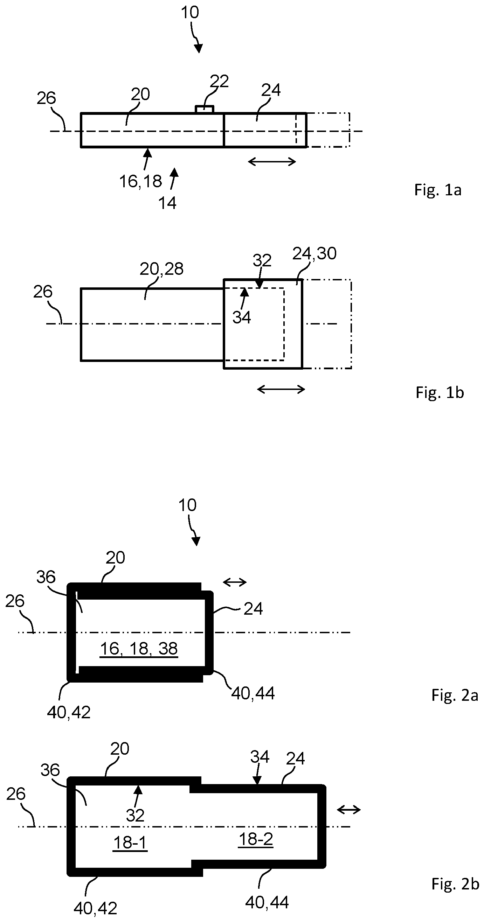

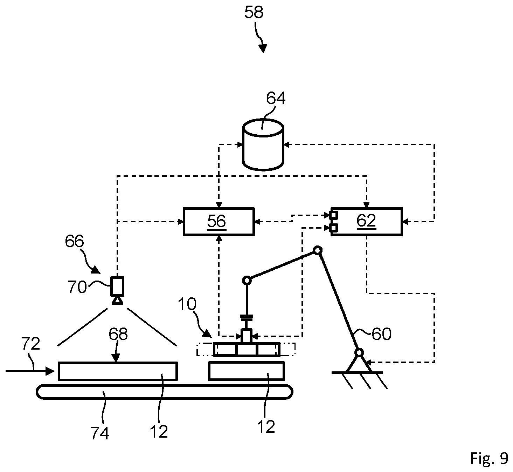

Die Figuren 1a und 1b zeigen in vereinfachter skizzierter Darstellung einen Sauggreifer 10 zum Greifen und Handhaben eines Gegenstands 12 (in Figur 9 dargestellt) in einer ersten Ausgestaltung, anhand welcher Aufbau und grundlegende Funktion des Sauggreifers 10 erläutert werden sollen.

Der Sauggreifer 10 weist eine Saugseite 14 mit einer Saugfläche 16 auf, welche einen effektiv wirksamen Saugquerschnitt 18 zum Ansaugen des Gegenstands 12 bereitstellt (nachfolgend noch im Detail beschrieben).

Der Sauggreifer 10 umfasst ein Basisteil 20, welches beispielhaft und bevorzugt einen Unterdruckanschluss 22 zur Verbindung mit einer externen Unterdruckversorgung (nicht dargestellt) aufweist. Der Sauggreifer 10 umfasst außerdem ein Verschiebeteil 24, welches entlang einer Verschiebeachse 26 relativ zu dem Basisteil 20 verschiebbar ist. Eine Verschiebungskonfiguration des Verschiebeteils 24 ist in den Figuren 1a und 1b durch strichpunktierte Linien angedeutet. Das Basisteil 20 und das Verschiebeteil 24 stellen wie nachfolgend noch im Detail erläutert gemeinsam die Saugfläche 16 bereit.

Beispielhaft und bevorzugt weisen das Basisteil 20 und das Verschiebeteil 24 jeweils ein Gehäuse 28, 30 auf, welche teleskopartig ineinander einschiebbar und wieder ausziehbar sind. Wie aus Figur 1b ersichtlich umgreift das Verschiebeteil 24 in dem dargestellten Beispiel zumindest abschnittsweise das Basisteil 20. Es sind aber auch andere Konfigurationen denkbar, beispielsweise in welchen das Basisteil 20 das Verschiebeteil 24 umgreift (vgl. Ausgestaltung gemäß Figur 2).

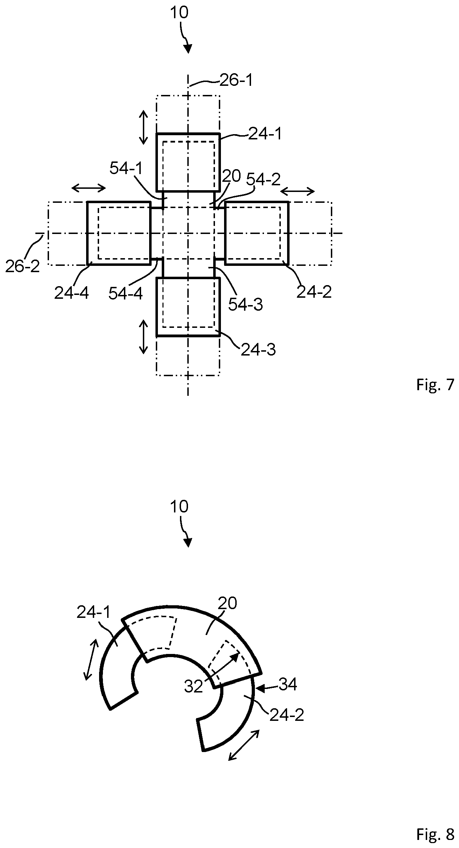

Vorzugsweise ist das Verschiebeteil 24 an dem Basisteil 20 verschiebbar gehaltert. Zu diesem Zweck weisen das Basisteil 20 eine Führungsfläche 32 und das Verschiebeteil 24 eine zugeordnete Gegenfläche 34 derart auf, dass beim Verschieben des Verschiebeteils 24 seine Gegenfläche 34 an der Führungsfläche 32 abgleitet. Beispielhaft und bevorzugt sind die Führungsfläche 32 und die Gegenfläche 34 zumindest abschnittsweise als Parallelflächen ausgebildet sind. Dabei können die Parallelflächen beispielsweise eben (vgl. Figuren 1 bis 7) oder gewölbt (vgl. Figur 8, nachfolgend noch näher erläutert) sein. Bei nicht dargestellten Ausführungsformen können die Parallelflächen auch als Freiformflächen mit unregelmäßigem Verlauf ausgebildet sein.

Das Gehäuse 28 des Basisteils 20 und das Gehäuse 30 des Verschiebeteils 24 begrenzen, insbesondere gemeinsam, eine Unterdruckkammer 36, welche in Richtung zur Saugseite 14 hin durch eine Ansaugöffnung 38 offen ist (vgl. Figuren 2a und 2b). Die Ansaugöffnung 38 ist von einer Dichtlippe 40 umgrenzt, welche zur Anlage an einen zu greifenden Gegenstand 12 ausgebildet ist. Die Ansaugöffnung 38 stellt insofern nach Art einer Saugglocke die Saugfläche 16 bereit.

Wie beispielsweise aus Figur 2b ersichtlich, weist die Dichtlippe 40 einen ersten Dichtlippenabschnitt 42 und einen zweiten Dichtlippenabschnitt 44 auf. Der erste Dichtlippenabschnitt 42 ist in dem dargestellten Beispiel dem Basisteil 20 zugeordnet und der zweite Dichtlippenabschnitt 44 ist dem Verschiebeteil 20 zugeordnet. Die Dichtlippenabschnitte 42, 44 sind derart ausgebildet, dass sie zumindest abschnittsweise ineinander einschiebbar und wieder ausziehbar sind. Die Figuren 2a und 2b zeigen den Sauggreifer 10 in einer Untersicht, wobei der Sauggreifer 10 in Figur 2a in einer Konfiguration mit abschnittsweise ineinander eingeschobenen Dichtlippenabschnitten 42, 44 und in Figur 2b in einer Konfiguration mit ausgezogenen Dichtlippenabschnitten 42, 44 dargestellt ist. Wie aus den Figuren 2a und 2b ersichtlich, ist ein erster Bereich 18-1 des Saugquerschnitts 18 von dem Basisteil 20 bereitgestellt. Ein weiterer Bereich 18-2 des Saugquerschnitts 18 wird beim Ausziehen des Verschiebeteils 24 bereitgestellt. Mit anderen Worten ist also durch Ausziehen des Verschiebeteils 24 ein zusätzlicher Bereich des Saugquerschnitts 18 erzeugbar und auf diese Weise die Saugfläche 16 in ihrer Größe einstellbar.

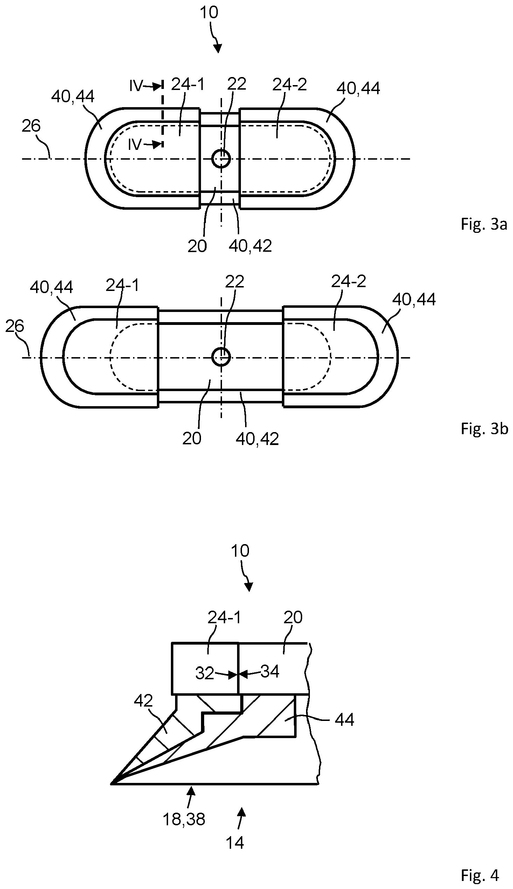

Die Dichtlippe 40 kann beispielhaft aus einem technischen Schaum gebildet sein (in den Figuren 2a und 2b angedeutet). Es ist auch möglich, dass die Dichtlippe 40 aus einem Elastomer hergestellt ist. Eine solche Ausgestaltung mit elastomerer Dichtlippe 40 ist in den Figuren 3a bis 4 dargestellt, welche eine Ausführungsform des Sauggreifers 10 mit zwei Verschiebeteilen 24-1, 24-2 in einer Draufsicht zeigen. Die zwei Verschiebeteile 24-1, 24-2 sind dabei entlang einer gemeinsamen Verschiebeachse 26 relativ zu dem Basisteil 20 verschiebbar. Wie aus Figur 4 ersichtlich, liegen die Dichtlippenabschnitte 42, 44 insbesondere derart eng aneinander an, dass sie gegeneinander abdichten, aber dennoch eine Relativbewegung zwischen Basisteil 20 und Verschiebeteil 24 zulassen.

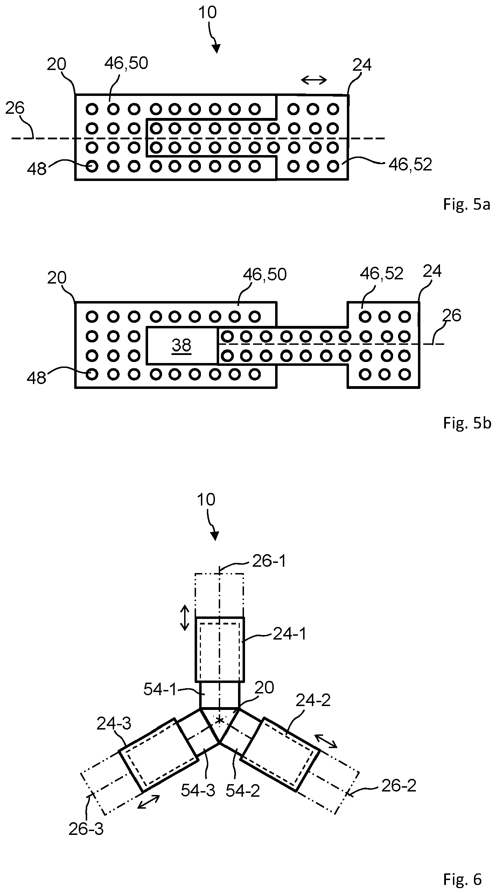

Die Figuren 5a und 5b zeigen eine weitere Ausgestaltung eines Sauggreifers 10, bei welcher die Saugfläche 16 durch eine Saugplatte 46 bereitgestellt ist. Die Saugplatte 46 umfasst eine Mehrzahl von Sauglöchern 48, über welche ein Gegenstand 12 ansaugbar ist. Die Saugplatte 46 ist in dem dargestellten Beispiel durch zwei Saugplattensegmente 50, 52 gebildet, welche zumindest abschnittsweise ineinander einschiebbar sind. In dem dargestellten Beispiel ist das erste Saugplattensegment 50 im wesentlichen U-förmig ausgebildet und das zweite Saugplattensegment 52 ist im wesentlichen T-Förmig ausgebildet, wobei das T-förmige Saugplattensegment 52 mit seinem langen Schenkel in das U-förmige Saugplattensegment 50 einschiebbar ist.

Insbesondere ist das erste Saugplattensegment 50 durch das Basisteil 20 bereitgestellt und das zweite Saugplattensegment 52 ist durch das wenigstens eine Verschiebeteil 24 bereitgestellt. Insofern ist durch Verschieben des Verschiebeteils 24 relativ zu dem Basiselement 20 eine Konfiguration der Saugplatte 46 veränderbar.

Die Figur 5a zeigt die Saugplatte 46 in einer ersten Konfiguration, in welcher die Saugplattensegmente 50, 52 vollständig ineinander eingeschoben sind. Die Figur 5b zeigt die Saugplatte 46 in einer zweiten Konfiguration, in welcher die Saugplattensegmente 50, 52 auseinandergezogen gezogen sind.

Wie aus den Figuren 5a und 5b ersichtlich ist die Saugplatte 46 insbesondere derart angeordnet, dass sie in der ersten Konfiguration mit ineinander eingeschobenen Saugplattensegmenten 50, 52 (vgl. Figur 5a) die Ansaugöffnung 38 der Unterdruckkammer 36 (in Figur 5a nicht sichtbar) abdeckt und in der zweiten Konfiguration mit auseinandergezogenen Saugplattensegmenten 50, 52 (vgl. Figur 5b) die Ansaugöffnung 38 zumindest abschnittsweise freigibt. In der zweiten Konfiguration stellt die Ansaugöffnung 38 dann einen zusätzlichen Saugquerschnitt 18 zum Ansaugen eines Gegenstands 12 bereit, sodass der effektiv wirksame Saugquerschnitt 18 insgesamt vergrößert wird.

Die Figuren 6 bis 8 zeigen in vereinfachter skizzierter Darstellung weitere Ausführungsformen des Sauggreifers 10 mit einer Mehrzahl von Verschiebeteilen 24. Die Sauggreifer 10 gemäß Figuren 6 bis 8 können dabei grundsätzlich wie vorstehend erläutert in der Art einer Saugglocke mit Dichtlippe 40 (vgl. Figuren 2a bis 4) und/oder mit Saugplatte 46 (vgl. Figuren 5a und 5b) ausgebildet sein.

Die Figur 6 zeigt einen Sauggreifer 10 in einer Ausgestaltung mit drei Verschiebeteilen 24-1, 24-2, 24-3. In dem dargestellten Beispiel umfasst das Basisteil 20 drei sternförmig angeordnete Schenkel 54-1, 54-2, 54-3, wobei an jedem Schenkel 54-1, 54-2, 54-3 jeweils ein Verschiebeteil 24-1, 24-2, 24-3 verschiebbar gehaltert ist. Insofern verlaufen entsprechende Verschiebeachsen 26-1, 26-2, 26-3 der Verschiebeteile 24-1, 24-2, 24-3 sternförmig aufeinander zu.

Die Figur 7 zeigt einen Sauggreifer 10 in einer Ausgestaltung mit vier Verschiebteilen 24-1, 24-2, 24-3, 24-4. Das Basisteil 20 umfasst dabei vier Schenkel 54-1, 54-2, 54-3, 54-4, welche in der Art eines Kreuzes angeordnet ist. An jedem Schenkel 54-1, 54-2, 54-3, 54-4 ist dabei ein Verschiebeteil 24-1, 24-2, 24-3, 24-4 verschiebbar gehaltert. Insofern sind jeweils zwei Verschiebeteile 24-1, 24-2, 24-3, 24-4 entlang einer gemeinsamen Verschiebeachse 26-1, 26-2 verschiebbar.

Eine weitere Ausgestaltung des Sauggreifers 10 mit zwei Verschiebeteilen 24-1, 24-2 ist in Figur 8 gezeigt. In dem dargestellten Beispiel sind das Basisteil 20 und die Verschiebeteile 24-1, 24-2 bogenförmig ausgebildet. Insofern sind die Führungsflächen 32 des Basisteils 20 und die Gegenflächen 34 der Verschiebeteile 24-1, 24-2 entsprechend gewölbt ausgebildet, sodass die Verschiebeteile 24-1, 24-2 entlang bogenförmiger Verschiebekurven relativ zu dem Basisteil 20 verschiebbar sind.

Bei den dargestellten Ausgestaltungen kann zur gegenseitigen Abdichtung des Basisteils 20 und der Verschiebeteile 24 eine Dichteinrichtung (nicht dargestellt) vorgesehen sein. Beispielweise kann die Dichteinrichtung wenigstens eine abrollbare Dichtmembran umfassen, welche das Basisteil 20 und das wenigstens eine Verschiebeteil 24 miteinander verbindet.

Grundsätzlich ist möglich, dass das wenigstens eine Verschiebeteil 24 manuell verschiebbar ausgebildet ist. Vorzugsweise umfasst der Sauggreifer 10 jedoch eine Aktorik (nicht dargestellt) zum Antreiben einer Verschiebebewegung des wenigstens einen Verschiebeteils 24 relativ zu dem Basisteil 20.

Zur Ansteuerung der Aktorik kann eine Steuereinrichtung 56 vorgesehen sein, welche insbesondere Teil einer Unterdruckhandhabungsanlage 58 zum Handhaben von Gegenständen 12 ist.

Eine solche Unterdruckhandhabungsanlage 58 in Figur 9 dargestellt. Die Unterdruckhandhabungsanlage 58 umfasst einen vorstehend erläuterten Sauggreifer 10 mit Aktorik und eine vorstehend erwähnte Steuereinrichtung 56.

Beispielhaft und bevorzugt ist der Sauggreifer 10 an einem Roboter 60 zur Verlagerung des Sauggreifers 10 im Raum gehaltert ist. Der Roboter 60 ist über eine entsprechend eingerichtete Robotersteuerung 62 ansteuerbar.

Die Steuereinrichtung 56 ist dazu ausgebildet, die Aktorik zum Ansteuern einer Verschiebebewegung des wenigstens einen Verschiebeteils 24 relativ zu dem Basisteil 20 anzusteuern. Die Steuereinrichtung 56 umfasst in dem dargestellten Beispiel einen nichtflüchtigen Datenspeicher 64, in welchem Steuerungsdaten zur Ansteuerung der Aktorik hinterlegbar oder hinterlegt sind. Ebenso können Greifobjekt-Daten hinterlegt sein, welche die auszuführende Handhabungsaufgabe definieren.

Optional kann die Unterdruckhandhabungsanlage 58 außerdem eine mit der Steuereinrichtung 56 zusammenwirkende Sensoreinrichtung 66 umfassen, welche dazu ausgebildet ist, eine greifbare Fläche oder die Außenform eines zu greifenden Gegenstands 12 zu erfassen, insbesondere die Größe einer zur Verfügung stehenden Greiffläche 68 zu detektierten. Die Sensoreinrichtung 66 ist insbesondere eine Kameraeinrichtung, welche eine entsprechend ausgebildete Kamera 70 umfasst. Vorzugsweise ist die Kamera 70 derart angeordnet, dass sie denjenigen Gegenstand 12 erfassen kann, welcher in einer Förderrichtung 72 - in welcher Gegenstände 12, bspw. mittels einer Fördereinrichtung 74, zu dem Sauggreifer 10 gefördert werden - einem bereits mittels des Sauggreifers 10 gegriffenen Gegenstand 12 nachfolgt.

Die Steuereinrichtung 56 wirkt mit der Sensoreinrichtung 66 vorzugsweise derart zusammen, dass die Steuereinrichtung 56 in Abhängigkeit einer von der Sensoreinrichtung 66 erfassten Außenform des Gegenstands 12, insbesondere einer Größe einer detektierten Greiffläche 68, die Aktorik derart ansteuert, dass ein an die Größe der Greiffläche 68 angepasster Saugquerschnitt 18 eingestellt wird.

## Patentansprüche

1. Sauggreifer (10) zum Greifen und Handhaben eines Gegenstands (12) mittels Unterdruck,
umfassend ein Basisteil (20)und eine Saugseite (14) mit einer Saugfläche (16), welche einen Saugquerschnitt (18) zum Ansaugen des Gegenstands (12) bereitstellt,
wobei der Sauggreifer (10) wenigstens ein Verschiebeteil (24) aufweist, welches relativ zu dem Basisteil (20) verschiebbar ist,
wobei das Basisteil (20) und das wenigstens eine Verschiebeteil (24) derart ausgebildet sind, dass sie gemeinsam die Saugfläche (16) bereitstellen und durch Verschieben des wenigstens einen Verschiebeteils (24) relativ zu dem Basisteil (20) der Saugquerschnitt (18) der Saugfläche (16) einstellbar ist,
wobei das Basisteil (20) und das wenigstens eine Verschiebeteil (24) zumindest abschnittsweise ineinander einschiebbar und wieder ausziehbar sind,
**dadurch gekennzeichnet, dass** das Basisteil (20) und das wenigstens eine Verschiebeteil (24) derart ausgebildet sind, dass beim Ineinander-Einschieben der Saugquerschnitt der Saugfläche verkleinert wird und beim Auseinanderziehen der Saugquerschnitt vergrößert wird.

2. Sauggreifer (10) nach Anspruch 1, wobei ein erster Bereich (18-1) des Saugquerschnitts (18) von dem Basisteil (20) bereitgestellt wird und wenigstens ein weiterer Bereich (18-2) des Saugquerschnitts (18) größenveränderbar in Abhängigkeit einer Verschiebungskonfiguration des wenigstens einen Verschiebeteils (24) gegenüber dem Basisteil (20) bereitgestellt wird.

3. Sauggreifer (10) nach einem der vorherigen Ansprüche, wobei das wenigstens eine Verschiebeteil (24) an dem Basisteil (20) verschiebbar gelagert ist.

4. Sauggreifer (10) nach einem der vorherigen Ansprüche, wobei das Basisteil (20) eine Führungsfläche (32) und das Verschiebeteil (24) eine zugeordnete Gegenfläche (34) derart aufweisen, dass beim Verschieben des Verschiebeteils (24) seine Gegenfläche (34) an der Führungsfläche (32) abgleitet, wobei die Führungsfläche (32) und die Gegenfläche (34) zumindest abschnittsweise als Parallelflächen ausgebildet sind.

5. Sauggreifer (10) nach einem der vorherigen Ansprüche, wobei die Saugfläche (16) von einer Dichtlippe (40) umgrenzt ist, wobei die Dichtlippe (40) wenigstens zwei zumindest abschnittsweise ineinander einschiebbare Dichtlippenabschnitte (42, 44) aufweist, wobei ein erster Dichtlippenabschnitt (42) von dem Basisteil (20) bereitgestellt ist und wobei ein zweiter Dichtlippenabschnitt (44) von dem wenigstens einen Verschiebeteil (24) bereitgestellt ist.

6. Sauggreifer (10) nach einem der vorherigen Ansprüche, wobei die Saugfläche (16) durch eine Saugplatte (46) mit einer Mehrzahl von Sauglöchern (48) bereitgestellt ist,
wobei die Saugplatte (46) wenigstens zwei relativ zueinander verschiebbare, insbesondere zumindest abschnittsweise ineinander einschiebbare, Saugplattensegmente (50, 52) umfasst,
wobei ein erstes Saugplattensegment (50) durch das Basisteil (20) bereitgestellt ist und wobei ein zweites Saugplattensegment (52) durch das wenigstens eine Verschiebeteil (24) bereitgestellt ist.

7. Sauggreifer (10) nach Anspruch 6, wobei das Basisteil (20) und/oder das wenigstens eine Verschiebeteil (24) ein Gehäuse (28, 30) mit einer Unterdruckkammer (36) aufweist,
wobei die Unterdruckkammer (36) eine Ansaugöffnung (38) aufweist,
wobei die Ansaugöffnung (38) derart angeordnet und ausgebildet ist, dass sie in einer Konfiguration des Sauggreifers (10) mit ineinander eingeschobenen Saugplattensegmenten (50, 52) durch die Saugplatte (46) abgedeckt ist und in einer Konfigurationen des Sauggreifers (10) mit auseinandergezogenen Saugplattensegmenten (50, 52) zumindest abschnittsweise geöffnet ist.

8. Sauggreifer (10) nach einem der vorherigen Ansprüche, wobei eine Dichteinrichtung zur gegenseitigen Abdichtung des Basisteils (20) und des wenigstens einen Verschiebeteils (24) vorgesehen ist, insbesondere wobei die Dichteinrichtung wenigstens eine abrollbare Dichtmembran umfasst, welche das Basisteil (20) und das wenigstens eine Verschiebeteil (24) miteinander verbindet.

9. Sauggreifer (10) nach einem der vorherigen Ansprüche, außerdem umfassend eine Aktorik zum Antreiben einer Verschiebebewegung des wenigstens einen Verschiebeteils (24) relativ zu dem Basisteil (20).

10. Unterdruckhandhabungsanlage (58), umfassend einen Sauggreifer (10) nach Anspruch 9 und eine Steuereinrichtung (56), wobei die Steuereinrichtung (56) dazu eingerichtet ist, die Aktorik zum Antreiben einer Verschiebebewegung zwischen dem Basisteil (20) und dem wenigstens einen Verschiebeteil (24) anzusteuern.

11. Unterdruckhandhabungsanlage (58) nach Anspruch 10, außerdem umfassend eine mit der Steuereinrichtung (56) zusammenwirkende Sensoreinrichtung (66), insbesondere Kameraeinrichtung (66), welche dazu ausgebildet ist, eine greifbare Fläche und/oder Außenform eines zu greifenden Gegenstands (12) zu erfassen.

## Claims

1. Suction gripper (10) for gripping and handling an object (12) by means of a vacuum,
comprising a base part (20) and a suction side (14) having a suction surface (16) which provides a suction cross section (18) for sucking up the object (12),
the suction gripper (10) having at least one displacement part (24) which is can be displaced relative to the base part (20),
the base part (20) and the at least one displacement part (24) being designed such that they jointly provide the suction surface (16), and it being possible for the suction cross section (18) of the suction surface (16) to be adjusted by displacing the at least one displacement part (24) relative to the base part (20),
it being possible for the base part (20) and the at least one displacement part (24), at least in portions, to be pushed into one another and pulled apart again,
**characterized in that** the base part (20) and the at least one displacement part (24) are designed such that the suction cross section of the suction surface is reduced when they are pushed into one another and the suction cross section is increased when they are pulled apart.

2. Suction gripper (10) according to claim 1, wherein a first region (18-1) of the suction cross section (18) is provided by the base part (20) and at least one further region (18-2) of the suction cross section (18) is provided so as to be variable in size depending on a displacement configuration of the at least one displacement part (24) relative to the base part (20).

3. Suction gripper (10) according to either of the preceding claims, wherein the at least one displacement part (24) is mounted so as to be displaceable on the base part (20).

4. Suction gripper (10) according to any of the preceding claims, wherein the base part (20) has a guide surface (32) and the displacement part (24) has an associated counter surface (34) such that, when the displacement part (24) is displaced, its counter surface (34) slides on the guide surface (32), wherein the guide surface (32) and the counter surface (34) are designed, at least in portions, as parallel surfaces.

5. Suction gripper (10) according to any of the preceding claims, wherein the suction surface (16) is surrounded by a sealing lip (40), wherein the sealing lip (40) has at least two sealing lip portions (42, 44) which can be pushed into one another at least in portions, wherein a first sealing lip portion (42) is provided by the base part (20), and wherein a second sealing lip portion (44) is provided by the at least one displacement part (24).

6. Suction gripper (10) according to any of the preceding claims, wherein the suction surface (16) is provided by a suction plate (46) having a plurality of suction holes (48),
wherein the suction plate (46) comprises at least two suction plate segments (50, 52) which can be displaced relative to one another, in particular can be pushed into one another at least in portions,
wherein a first suction plate segment (50) is provided by the base part (20), and wherein a second suction plate segment (52) is provided by the at least one displacement part (24).

7. Suction gripper (10) according to claim 6, wherein the base part (20) and/or the at least one displacement part (24) has a housing (28, 30) having a vacuum chamber (36),
wherein the vacuum chamber (36) has a suction opening (38),
wherein the suction opening (38) is arranged and designed such that it is covered by the suction plate (46) in a configuration of the suction gripper (10), in which suction plate segments (50, 52) are pushed into one another, and is open, at least in portions, in a configuration of the suction gripper (10), in which suction plate segments (50, 52) are pulled apart.

8. Suction gripper (10) according to any of the preceding claims, wherein a sealing device is provided for mutual sealing of the base part (20) and the at least one displacement part (24), in particular wherein the sealing device comprises at least one rollable sealing membrane which connects the base part (20) and the at least one displacement part (24) to one another.

9. Suction gripper (10) according to any of the preceding claims, further comprising an actuator system for driving a displacement movement of the at least one displacement part (24) relative to the base part (20).

10. Vacuum handling system (58), comprising a suction gripper (10) according to claim 9 and a control device (56), wherein the control device (56) is configured to control the actuator system for driving a displacement movement between the base part (20) and the at least one displacement part (24).

11. Vacuum handling system (58) according to claim 10, further comprising a sensor device (66), in particular a camera device (66), which interacts with the control device (56) and is designed to detect a grippable surface and/or an outer shape of an object (12) to be gripped.

## Revendications

1. Elément de préhension aspirant (10) pour la préhension et la manipulation d'un objet (12) au moyen d'un vide,
comprenant une partie de base (20) et un côté d'aspiration (14) avec une surface d'aspiration (16), laquelle fournit une section transversale d'aspiration (18) pour aspirer l'objet (12),
dans lequel l'élément de préhension aspirant (10) comprend au moins une partie déplaçable (24), laquelle peut être déplacée par rapport à la partie de base (20),
dans lequel la partie de base (20) et l'au moins une partie déplaçable (24) sont réalisées de telle sorte qu'elles fournissent ensemble la surface d'aspiration (16) et la section transversale d'aspiration (18) de la surface d'aspiration (16) peut être réglée par déplacement de l'au moins une partie déplaçable (24) par rapport à la partie de base (20),
dans lequel la partie de base (20) et l'au moins une partie déplaçable (24) peuvent être insérées l'une dans l'autre au moins sur certaines sections et être à nouveau extraites, **caractérisé en ce que** la partie de base (20) et l'au moins une partie déplaçable (24) sont réalisées de telle sorte que, lors de l'insertion l'une dans l'autre, la section transversale d'aspiration de la surface d'aspiration est réduite et lors de l'extraction la section transversale d'aspiration est augmentée.

2. Elément de préhension aspirant (10) selon la revendication 1, dans lequel une première zone (18-1) de la section transversale d'aspiration (18) est fournie par la partie de base (20) et au moins une autre zone (18-2) de la section transversale d'aspiration (18) est fournie de manière à pouvoir être modifiée en taille en fonction d'une configuration déplaçable de l'au moins une partie déplaçable (24) par rapport à la partie de base (20).

3. Elément de préhension aspirant (10) selon l'une quelconque des revendications précédentes, dans lequel l'au moins une partie déplaçable (24) est montée déplaçable sur la partie de base (20).

4. Elément de préhension aspirant (10) selon l'une quelconque des revendications précédentes, dans lequel la partie de base (20) présente une surface de guidage (32) et la partie déplaçable (24) une contre-surface (34) associée, de telle sorte que, lors du déplacement de la partie déplaçable (24), sa contre-surface (34) glisse sur la surface de guidage (32), dans lequel la surface de guidage (32) et la contre-surface (34) sont réalisées au moins sur certaines sections sous forme de surfaces parallèles.

5. Elément de préhension aspirant (10) selon l'une quelconque des revendications précédentes, dans lequel la surface d'aspiration (16) est délimitée par une lèvre d'étanchéité (40), dans lequel la lèvre d'étanchéité (40) présente au moins deux sections de lèvre d'étanchéité (42, 44) pouvant être insérées l'une dans l'autre au moins sur certaines sections, dans lequel une première section de lèvre d'étanchéité (42) est fournie par la partie de base (20) et dans lequel une deuxième section de lèvre d'étanchéité (44) est fournie par l'au moins une partie déplaçable (24).

6. Elément de préhension aspirant (10) selon l'une quelconque des revendications précédentes, dans lequel la surface d'aspiration (16) est fournie par une plaque d'aspiration (46) avec une pluralité de trous d'aspiration (48),
dans lequel la plaque d'aspiration (46) comprend au moins deux segments de plaque d'aspiration (50, 52) pouvant être déplacés l'un par rapport à l'autre, en particulier pouvant être insérés l'un dans l'autre au moins sur certaines sections,
dans lequel un premier segment de plaque d'aspiration (50) est fourni par la partie de base (20) et dans lequel un deuxième segment de plaque d'aspiration (52) est fourni par l'au moins une partie déplaçable (24).

7. Elément de préhension aspirant (10) selon la revendication 6, dans lequel la partie de base (20) et/ou l'au moins une partie déplaçable (24) présente un boîtier (28, 30) avec une chambre à vide (36),
dans lequel la chambre à vide (36) présente une ouverture d'aspiration (38),
dans lequel l'ouverture d'aspiration (38) est disposée et réalisée de telle sorte qu'elle est recouverte par la plaque d'aspiration (46) dans une configuration de l'élément de préhension aspirant (10) avec les segments de plaque d'aspiration (50, 52) insérés l'un dans l'autre et ouverte au moins sur certaines sections dans une configuration de l'élément de préhension aspirant (10) avec les segments de plaque d'aspiration (50, 52) écartés.

8. Elément de préhension aspirant (10) selon l'une quelconque des revendications précédentes, dans lequel un dispositif d'étanchéité pour l'étanchéité mutuelle de la partie de base (20) et de l'au moins une partie déplaçable (24) est prévu, en particulier dans lequel le dispositif d'étanchéité comprend au moins une membrane d'étanchéité déroulable, laquelle relie la partie de base (20) et l'au moins une partie déplaçable (24).

9. Elément de préhension aspirant (10) selon l'une quelconque des revendications précédentes, comprenant en outre un système d'actionnement pour entraîner un mouvement de déplacement de l'au moins une partie déplaçable (24) par rapport à la partie de base (20).

10. Installation de manipulation sous vide (58), comprenant un élément de préhension aspirant (10) selon la revendication 9 et un dispositif de commande (56), dans laquelle le dispositif de commande (56) est conçu pour commander le système d'actionnement afin d'entraîner un mouvement de déplacement entre la partie de base (20) et l'au moins une partie déplaçable (24).

11. Installation de manipulation sous vide (58) selon la revendication 10, comprenant en outre un dispositif de détection (66), notamment un dispositif de caméra (66), coopérant avec le dispositif de commande (56), lequel est réalisé pour détecter une surface et/ou forme extérieure saisissable d'un objet (12) à saisir.
